# EUROPÄISCHE PATENTANMELDUNG

(11) **EP 1 186 254 A2**
(43) Veröffentlichungstag der Anmeldung: **13.03.2002**
(21) Anmeldenummer: 01129156.4
(22) Anmeldetag: 28.11.1997
(51) Int. Cl.: A46B 5/00, A61C 17/22

(54) **Motorisch betriebene Zahnbürste, insbesondere eine Elektrozahnbürste**

(30) Priorität: 16.07.1997 CH 174597
(62) Teilanmeldung aus: 97913074.7
(71) Anmelder: TRISA BÜRSTENFABRIK AG TRIENGEN, CH-6234 Triengen (CH)
(72) Erfinder: Fischer, Franz, 6234 Triengen (CH); Pfenniger, Philipp, 6234 Triengen (CH)
(74) Vertreter: Patentanwälte Schaad, Balass, Menzl & Partner AG

(57) **Zusammenfassung**

Eine motorisch betriebene Zahnbürste weist einen drehbeweglich antreibbaren, in einem Winkel zur Längsachse (A) der Zahnbürste angeordneten Bürstenkopf (5) auf. Der Bürstenkopf (5) weist einen Borstenträger (10) mit abstehenden Borsten (11) auf, deren Enden eine Bürstfläche (12) bilden. Ein langgestrecktes, einen Hohlraum (6) aufweisendes Gehäuse (2, 2a, 2b, 2c) der Zahnbürste ist durch eine Biegezone (29, 29a, 29b, 29c) in zwei relativ zueinander elastisch auslenkbare Gehäuseteile (3, 3a, 3b, 3c; 4, 4a, 4b, 4c) unterteilt, so dass bei einer Einwirkung von Kräften in Richtung gegen die Bürstfläche (12) der Bürstenkopf (5) in einer durch die Bürstenkopf-Drehachse (B) und die Längsachse (A) des Gehäuses (2, 2a, 2b, 2c) definierten Ebene elastisch verschwenkbar bzw. zurückdrängbar ist. Die Antriebsverbindung mit dem Bürstenkopf (5) bleibt auch bei der Auslenkung der Gehäuseteile (3, 3a, 3b, 3c; 4, 4a, 4b, 4c) erhalten.

## Beschreibung

Die Erfindung betrifft eine motorisch betriebene Zahnbürste, insbesondere eine Elektrozahnbürste gemäss dem Oberbegriff des Anspruches 1.

Eine Zahnbürste dieser Art ist beispielsweise aus der DE-U-295 20 230.0 bekannt. Bei dieser Zahnbürste ist ein einen drehbaren Borstenträger aufnehmender Gehäusekopfteil mit einem eine rechtwinklig zur Drehachse des Borstenträgers angeordnete Antriebswelle aufnehmenden Gehäuseteil fest verbunden.

Der vorliegenden Erfindung liegt die Aufgabe zugrunde, eine Zahnbürste der eingangs genannten Art zu schaffen, mit der eine bessere Reinigungswirkung erzielt werden kann.

Diese Aufgabe wird erfindungsgemäss durch eine Zahnbürste mit den Merkmalen des Anspruches 1 gelöst.

Dadurch, dass das Gehäuse eine Biegezone aufweist und durch diese in zwei relativ zueinander elastisch auslenkbare Gehäuseteile unterteilt ist, so dass bei einer Einwirkung von Kräften in Richtung gegen die Bürstfläche der in einer Antriebsverbindung verbleibende Bürstenkopf elastisch verschwenkbar bzw. zurückdrängbar ist, wird beim Gebrauch der Zahnbürste ein besseres Anliegen der reinigungswirksamen Bürstfläche und ein optimaler Anpressdruck erreicht.

Bevorzugte Weiterausgestaltungen der erfindungsgemässen Zahnbürste bilden den Gegenstand der abhängigen Ansprüche.

Ein Ausführungsbeispiel der erfindungsgemässen Zahnbürste ist in der Zeichnung dargestellt und im folgenden näher beschrieben.

Es zeigen rein schematisch:
- Fig. 1: ein erstes Ausführungsbeispiel eines Aufsteckteiles einer Elektrozahnbürste in Ansicht;
- Fig. 2: im Längsschnitt den Aufsteckteil gemäss Fig. 1 in einer Normalstellung ;
- Fig. 3: im Längsschnitt den Aufsteckteil gemäss Fig. 1 in einer Auslenkstellung;
- Fig. 4: ein zweites Ausführungsbeispiel eines Aufsteckteiles einer Elektrozahnbürste in Ansicht in der der Fig. 2 entsprechenden Normalstellung;
- Fig. 5: ein drittes Ausführungsbeispiel eines Aufsteckteiles einer Elektrozahnbürste in Ansicht in der der Fig. 2 entsprechenden Normalstellung; und
- Fig. 6: ein viertes Ausführungsbeisplel eines Aufsteckteiles einer Elektrozahnbürste in Ansicht in der der Fig. 2 entsprechenden Normalstellung.

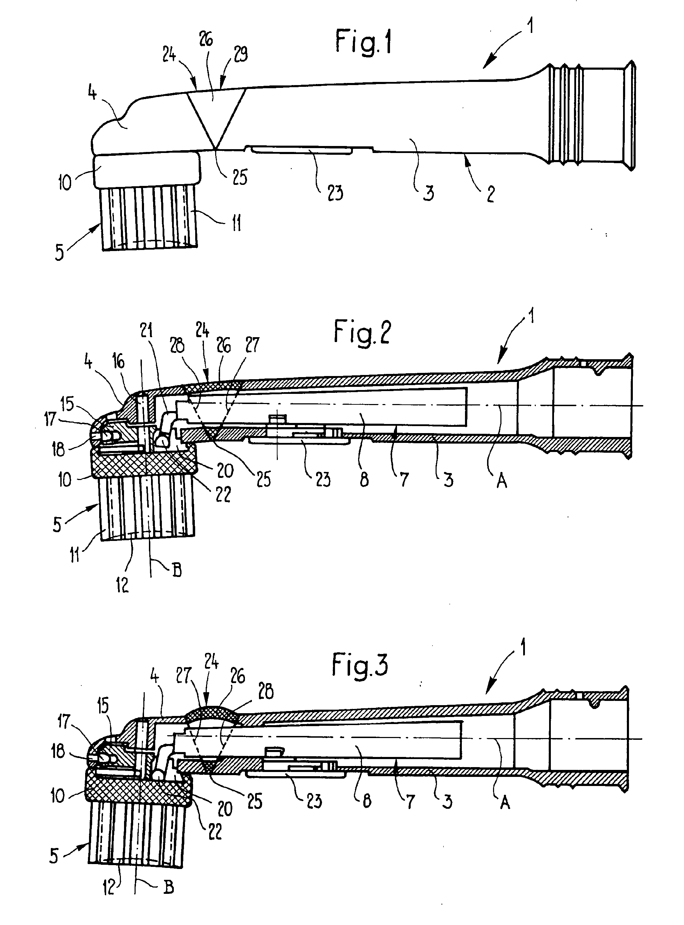

Gemäss Fig. 1 bis 3 weist ein Aufsteckteil 1 für eine Elektrozahnbürste ein Gehäuse 2 auf, das auf einen in der Zeichnung nicht dargestellten Griffteil aufsteckbaren, hinteren Gehäuseteil 3 sowie einen vorderen Gehäuseteil 4 umfasst. Im vorderen Gehäuseteil 4 ist ein Bürstenkopf 5 drehbeweglich gelagert, der mittels einer in einem Hohlraum 6 des Gehäuses 2 untergebrachten Übertragungsvorrichtung 7, von der in Fig. 2 und 3 nur ein Teil ersichtlich ist, von einem in der Zeichnung nicht dargestellten Elektromotor angetrieben wird. Dem Bürstenkopf 5 wird eine alternierende Drehbewegung bzw. Drehschwingung erteilt, wobei der Drehwinkelbereich einstellbar ist. Eine derartige Zahnbürste bzw. eine derartige Übertragungsvorrichtung bilden den Gegenstand des DE-U-295 20 230.0; die Übertragungsvorrichtung 7 an sich wird daher im folgenden nicht im Detail beschrieben. Eine Antriebswelle der Übertragungsvorrichtung 7 ist in Fig. 2 und 3 mit 8 bezeichnet, die Antriebsachse mit A. Die Bürstenkopfachse ist mit dem Bezugszeichen B versehen.

Der Bürstenkopf 5 weist einen Borstenträger 10 mit abstehenden Borsten 11 auf. Die freistehenden Enden der Borsten 11 bilden eine Bürstfläche 12. Als Beispiel ist eine zur Bürstenkopfachse B konzentrische, konkav gewölbte Bürstfläche 12 dargestellt.

Wie aus Fig. 2 und 3 ersichtlich ist der Borstenträger 10 in der Art einer Schnappverbindung mit einer im Gehäuseteil 4 drehbar gelagerten Drehscheibe 15 verbunden und zum Auswechseln des Bürstenkopfes 5 von dieser wegnehmbar. Die Drehscheibe 15 mit dem Bürstenkopf 5 ist um einen im Gehäuseteil 4 angebrachten, mit der Bürstenkopfachse B koaxialen Achsenstift 16 in beiden Drehrichtungen schwenkbar. Mittels eines in eine kreissegmentförmige Ausnehmung 17 in der Drehscheibe 15 hineinragenden, radial zur Bürstenkopfachse B im Gehäuseteil 4 angeordneten Sicherungsstiftes 18 ist die Drehscheibe 15 im Gehäuseteil 4 axial gesichert.

Die Übertragung der alternierenden Drehbewegung von der Antriebswelle 8 auf die Drehscheibe 15 und auf den mit dieser verbundenen Bürstenkopf 5 erfolgt in der aus dem DE-U-295 20 230.0 bereits bekannten Weise, nämlich mittels eines der Antriebswelle 8 zugeordneten, in eine radiale Ausnehmung 20 in der Drehscheibe 15 hineinragenden Nockens 21. Der Nocken 21 ist hier im Kontaktbereich mit der Ausnehmung 20 mit einem kugelförmigen Teil 22 ausgestattet. Auch bei dieser in Fig. 1 bis 3 dargestellten Ausführungsform der Zahnbürste kann mittels einer axialen Verschiebung der mit dem Nocken 21 ausgestatteten Antriebswelle 8 der Winkelbereich der Drehverschwenkung der Drehscheibe 15 und des Bürstenkopfes 5 eingestellt werden. Die Verschiebung der Antriebswelle 8 und somit die radiale Verstellung des Nockens 21 in der Ausnehmung 20 zwecks Winkelbereich-Einstellung erfolgt durch Umschalten eines in vorzugsweise zwei verschiedene Schaltpositionen verstellbaren Schiebers 23.

Zwischen dem hinteren Gehäuseteil 3 und dem mit dem Bürstenkopf versehenen vorderen Gehäuseteil 4 befindet sich erfindungsgemäss eine Biegezone 29, so dass beim Gebrauch der Zahnbürste bei einer Einwirkung von Kräften in Richtung gegen die Bürstfläche 12 der Gehäuseteil 4 mit dem Bürstenkopf 5 elastisch aus der in Fig. 2 gezeigten Normalstellung in eine Auslenkstellung zurückdrängbar ist. Bei dem in Fig. 1 bis 3 dargestellten Ausführungsbeispiel sind die beiden, aus Kunstoff hergestellten Gehäuseteile 3, 4 voneinander getrennt und nur mittels einer Gelenkverbindung 24 miteinander verbunden. Die Gelenkverbindung 24 umfasst ein die Schwenkachse des Gehäuseteiles 4 bildendes, dünnes Kunststoff-Scharnier 25 (Filmscharnier) sowie eine Gelenkmanschette 26. Das Scharnier 25 ist rechtwinklig zu einer durch die Bürstenkopfachse B und die Antriebsachse A, die zugleich die Längsachse des Gehäuseteils 3 bildet, definierten Ebene angeordnet; die Schwenkachse verläuft somit senkrecht zur Zeichnungsebene.

Die Gelenkmanschette 26 aus einem gummielastischen Material ist zwischen den beiden Gehäuseteilen 3, 4 bzw. zwischen ihren einander zugewandten Stirnflächen 27, 28 - sich zum Scharnier 25 hin keilförmig verjüngend - eingebaut.

Bei der dargestellten, bevorzugten Ausführungsform kann der mit dem Bürstenkopf 5 versehene vordere Gehäuseteil 4 gegenüber dem hinteren Gehäuseteil 3 um die durch das Scharnier 25 definierte Schwenkachse im Uhrzeigersinn nach Fig.2 etwa um 6° verschwenkt bzw. zurückgedrängt werden. Dabei wird die gummielastische Gelenkmanschette 26 zusammengepresst, der keilförmige Raum zwischen dem Kopfteil 4 und dem Gehäuseteil 3 verkleinert, und das gummielastische Material beult sich auf der dem Scharnier 25 abgewandten Seite etwas nach aussen (Fig. 3). Sobald die Krafteinwirkung auf den Bürstenkopf 5 aufgehoben wird, kehrt der Kopfteil 4 mit dem Bürstenkopf 5 unter Wirkung der sich entspannenden gummielastischen Gelenkmanschette 26 in die in Fig. 2 dargestellte Neutralstellung zurück. Die Biegezone könnte jedoch derart ausgebildet sein, dass eine Verschwenkung des mit dem Bürstenkopf 5 versehenen Gehäuseteiles 4 im Winkelbereich bis zu 90° möglich wäre.

Bei der in Fig. 2 und 3 dargestellten Ausführungsform ragt der Nocken 21 in der Normalstellung nach Fig.2 mit Spiel, d.h nicht ganz bis zum Borstenträger 10, in die Ausnehmung 20 der Drehscheibe 15 hinein; in der in Fig. 3 gezeigten Auslenkstellung befindet sich der Nocken 21 sehr nahe beim Borstenträger 10. In beiden Endstellungen des Gehäuseteiles 4 wird der Eingriff des Nockens 21 in die Ausnehmung 20 gewährleistet. Der kugelförmige Teil 22 des Nockens 21 ermöglicht in jeder Schwenkstellung des Gehäuseteiles 4 eine einwandfreie Bewegungsübertragung auf die Drehscheibe 15 sowie eine reibungslose Verschwenkung des Gehäuseteiles 4.

Wird der Bürstenkopf 5 im Betrieb durch die in Richtung gegen die Bürstfläche 12 wirkenden Kräfte aus der Normalstellung zurückgedrängt, so verändert sich die Lage des Nockens 21 in der radialen Ausnehmung 20, d.h. der Abstand zwischen dem Nocken 21 und dem die Drehachse B des Bürstenkopfes 5 festlegenden Achsenstift 16 wird verkleinert. Das hat zur Folge, dass der Drehwinkel des Bürstenkopfes 5 verkleinert wird, ohne dass von aussen eine Drehwinkelumstellung erfolgen muss. Anders ausgedrückt verkleinert sich der Drehwinkel des Bürstenkopfes 5 mit der Zunahme der auf den Bürstenkopf 5 wirkenden Druckkräfte.

Es wäre jedoch auch möglich, die Antriebswelle 8 der Übertragungsvorrichtung 7 so auszubilden, dass sie die Auslenkung des Gehäuseteiles 4 und der in diesem gelagerten Drehscheibe 15 mitmachen kann, damit der Nocken 21 bei Verschwenkung des Gehäuseteiles 4 einwandfrei im Eingriff mit der Ausnehmung 20 bleibt. Die Antriebswelle kann hiezu beispielsweise als eine flexible Welle ausgestaltet oder mit einem Kardangelenk ausgestattet sein.

Durch die elastische Auslenkbarkeit des den Bürstenkopf 5 aufnehmenden Gehäuseteiles 4 wird beim Gebrauch der Zahnbürste ein besseres Anliegen der reinigungswirksamen Bürstfläche 12 und ein optimaler Anpressdruck erreicht.

Beim dargestellten Ausführungsbeispiel ist der Winkel zwischen der Bürstenkopfachse B und der Antriebsachse A vor der Verschwenkung, d.h. in der Neutralstellung etwas kleiner als 90°, d.h der Bürstenkopf 5 ist etwas rückwärts geneigt. In der maximalen Auslenkstellung ist dieser Winkel etwas grösser als 90°; d.h der Bürstenkopf 5 ist etwas vorwärts geneigt. Es könnten allerdings auch andere Winkelverhältnisse beider Achsen in den Endstellungen angestrebt werden.

Bei der in Fig. 1 bis 3 dargestellten Ausführungsform befindet sich die Schwenkachse bzw. das Scharnier 25 auf der unteren Seite des Gehäuses 2 und die gummielastische Gelenkmanschette 26 wird beim Zurückdrängen des Gehäuseteiles 4 auf Druck beansprucht. Die Schwenkachse bzw. das Scharnier 25 könnten allerdings auch auf der oberen Seite des Gehäuses 2 platziert sein, so dass die gummielastische Gelenkmanschette bei Verschwenkung des Gehäuseteiles 4 statt der Druck-Beanspruchung einer Zug-Beanspruchung ausgesetzt wäre.

Der Aufsteckteil 1 kann beispielsweise in einem Zweikomponeneten-Spritzgussverfahren hergestellt werden.

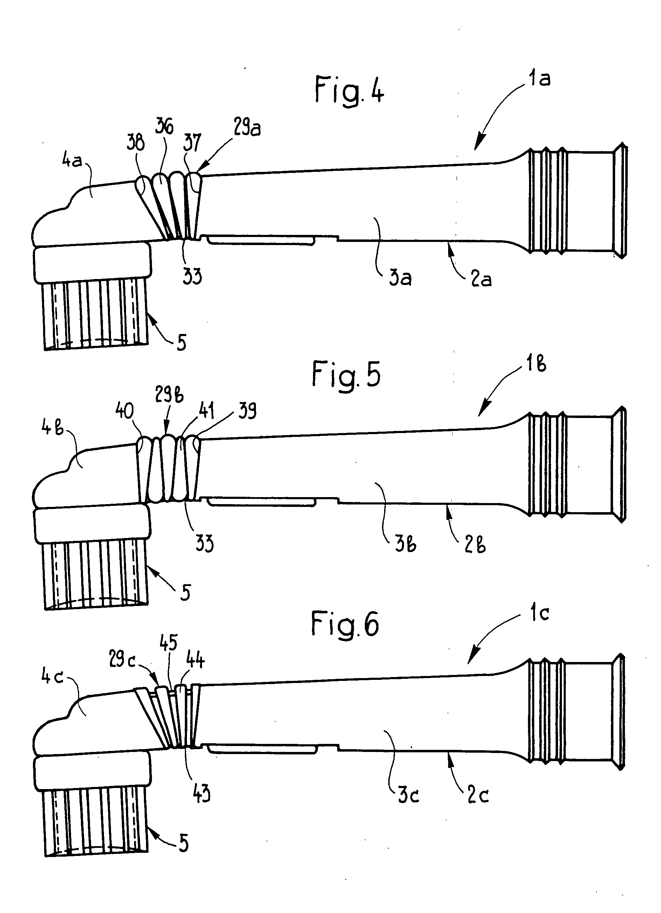

Fig. 4 zeigt ein zweites Ausführungsbeispiel eines Aufsteckteiles 1a für eine Elektrozahnbürste. Bei diesem Ausführungsbeispiel sind die beiden Gehäuseteile 3a, 4a vorzugsweise über schmale, biegsame Stege (in Fig. 4 nicht sichtbar) miteinander verbunden. Während die beiden Gehäuseteile 3a, 4a sowie der durch die Stege gebildete Gehäusebereich 33 aus dem gleichen Werkstoff hergestellt sind, ist zwischen einander zugewandten Stirnflächen 37, 38 beider Gehäuseteile 3a, 4a ein manschettenförmiger Balg 36 aus einem anderen, gummielastischem Material eingebaut, der zusammen mit dem Gehäusebereich 33 die Biegezone 29a bildet. Beim Zurückdrängen des mit dem Bürstenkopf 5 versehenen Gehäuseteiles 4a wird der Balg 36 auf Druck beansprucht.

Auch bei der in Fig. 5 dargestellten dritten Ausführungsform eines Aufsteckteils 1b weist das Gehäuse 2b einen die beiden Gehäuseteile 3b, 4b verbindenden, vorzugsweise durch schmale Stegen (nicht sichtbar) gebildeten, elastisch biegsamen Gehäusebereich 33 auf. Ein zusammen mit dem Gehäusebereich 33 die Biegezone 29b bildender, zwischen Stirnflächen 39, 40 der beiden Gehäuseteile 3b, 4b eingebauter Balg 41 aus gummielastischem, andersartigem Material als die beiden Gehäuseteile 3b, 4b und die Stege, wird beim Zurückdrängen des mit dem Bürstenkopf 5 versehenen Gehäuseteiles 4b sowohl auf Druck, als auch auf Zug beansprucht.

Auch die Aufsteckteile 1a, 1b sind für die Herstellung in einem Zweikomponeneten-Spritzgussverfahren geeignet.

Eine weitere Ausführungsform eines Aufsteckteils 1c nach Fig. 6 stellt eine Einkomponente-Ausführung dar; die beiden Gehäuseteile 3c, 4c sowie auch die ganze Gehäusewand bzw. der elastisch deformierbare Gehäusebereich 43 in der Biegezone 29c sind aus dem gleichen Werkstoff hergestellt. Letztere umfasst wiederum vorzugsweise die die beiden Gehäuseteile 3c, 4c verbindende schmale Stege (in Fig. 6 nicht sichtbar) und ausserdem einen, manschettenförmigen Teil 44. Der die Funktion der Balge 36, 41 gemäss Fig. 4 und 5 übernehmende elastisch deformierbare Teil 44 kann zur Erhöhung der Elastizität mehrere Durchgänge 45 aufweisen.

Bei allen vorstehend beschriebenen Ausführungsformen wäre es auch möglich, die Biegezone 29 bzw. 29a bzw. 29b bzw. 29c weiter hinten zum Griff hin anzuordnen.

Die Biegezone kann so ausgestaltet sein, dass neben der Verschwenkung des den Bürstenkopf 5 tragenden Gehäuseteiles in der durch die Bürstenkopfachse B und die Längsachse A des Aufsteckteils definierten Ebene auch eine zusätzliche seitliche Verschwenkung desselben erfolgen kann. Dies kann beispielsweise mit den in den Fig. 4 bis 6 dargestellten Ausführungen der Biegezone ermöglicht werden. Allerdings wären auch andere Ausgestaltungen mit elastischen Ringen oder Falten denkbar.

Die erfindungsgemässe Auslenkbarkeit des den Bürstenkopf aufnehmenden Gehäuseteiles könnte selbstverständlich auch bei nicht alternierend, sondern in einer Drehrichtung angetriebenen Bürstenköpfen Anwendung finden.

## Patentansprüche

1. Motorisch betriebene Zahnbürste, insbesondere eine Elektrozahnbürste, mit einem Griffteil, einem in diesem untergebrachten Antrieb und einem auf den Griffteil aufsteckbaren Aufsteckteil (1), der ein langgestrecktes, innen einen Hohlraum (6) aufweisendes Gehäuse (2, 2a, 2b, 2c), einen im Gehäuse (2, 2a, 2b, 2c) drehbeweglich gelagerten Bürstenkopf (5), der einen Borstenträger (10) mit abstehenden Borsten (11) aufweist, deren Enden eine Bürstfläche (12) bilden, wobei die Drehachse (B) des Bürstenkopfes (5) in einem Winkel zur Längsachse (A) des Gehäuses (2, 2a, 2b, 2c) angeordnet ist, und eine im Hohlräum des Gehäuses (2, 2a, 2b, 2c) angeordnete, mit dem Antrieb koppelbare Übertragungsvorrichtung (7), über welche der Bürstenkopf (5) drehbeweglich antreibbar ist, umfasst, **dadurch gekennzeichnet, dass** das Gehäuse (2, 2a, 2b, 2c) des Aufsteckteils (1) eine Biegezone (29, 29a, 29b, 29c) aufweist und durch diese in zwei Gehäuseteile (3, 3a, 3b, 3c; 4, 4a, 4b, 4c) unterteilt ist, die relativ zueinander derart elastisch auslenkbar sind, dass bei einer Einwirkung von Kräften in Richtung gegen die Bürstfläche (12) der Bürstenkopf (5) in einer durch die Bürstenkopf-Drehachse (B) und die Längsachse (A) des Gehäuses (2, 2a, 2b, 2c) defihierten Ebene elastisch verschwenkbar bzw. zurückdrängbar ist, und dass die Übertragungsvorrichtung (7) derart ausgebildet ist, dass eine Antriebsverbindung mit dem Bürstenkopf (5) auch bei der Auslenkung der Gehäuseteile (3, 3a, 3b, 3c; 4, 4a, 4b, 4c) relativ zueinander erhalten bleibt.

2. Zahnbürste nach Anspruch 1, **dadurch gekennzeichnet, dass** die Biegezone (29a bzw. 29b bzw. 29c) einen elastisch deformierbaren, die beiden Gehäuseteile (3a, 3b, 3c; 4a, 4b, 4c) miteinander verbindenden Gehäusebereich (33 bzw. 43) umfasst.

3. Zahnbürste nach Anspruch 1, **dadurch gekennzeichnet, dass** die Biegezone (29) eine Gelenkverbindung (24) zwischen den beiden Gehäuseteilen (3, 4) umfasst.

4. Zahnbürste nach Anspruch 3, **dadurch gekennzeichnet, dass** die Gelenkverbindung (24) ein Scharnier (25), das eine rechtwinklig zu der durch die Bürstenkopf-Drehachse (B) und die Längsachse (A) des Gehäuses (2) definierten Ebene angeordnete Schwenkachse bildet, sowie eine gummielastische Gelenkmanschette (26) zwischen den beiden Gehäuseteilen (3, 4) umfasst.

5. Zahnbürste nach Anspruch 4, **dadurch gekennzeichnet, dass** die gummielastische Gelenkmanschette (26) keilförmig und sich zum Scharnier (25) verjüngend zwischen einander zugewandten Stirnflächen (27, 28) der beiden Gehäuseteile (3, 4) eingebaut ist.

6. Zahnbürste nach Anspruch 2, **dadurch gekennzeichnet, dass** der elastisch deformierbare Gehäusebereich (33 bzw. 43) die beiden Gehäuseteile (3a, 4a bzw. 3b, 4b bzw. 3c, 4c) verbindende, schmale Stege umfasst.

7. Zahnbürste nach Anspruch 2 oder 6, **dadurch gekennzeichnet, dass** ein zwischen einander zugewandten Stirnflächen (37, 38 bzw. 39, 40) der beiden Gehäuseteile (3a, 4a bzw. 3b, 4b) eingebauter manschettenförmiger Balg (36 bzw. 41) zusammen mit dem elastich deformierbaren Gehäusebereich (33 bzw. 43) die Biegezone (29a bzw. 29b) bildet.

8. Zahnbürste nach Anspruch 2 oder 6, **dadurch gekennzeichnet, dass** der elastisch deformierbare Gehäusebereich (43) aus dem gleichen Werkstoff hergestellt ist wie die beiden Gehäuseteile (3c, 4c) und einen manschettenförmigen, zur Erhöhung der Elastizität vorzugsweise mit Durchgängen versehenen Teil (44) aufweist.

9. Zahnbürste nach einem der Ansprüche 1 bis 8, mit einer im Hohlraum (6) des Gehäuses (2, 2a, 2b, 2c) angeordneten, einen Teil der Übertragungsvorrichtung (7) bildenden Antriebswelle (8), **dadurch gekennzeichnet, dass** die Antriebswelle (8) als flexible Welle ausgebildet ist.

10. Zahnbürste nach einem der Ansprüche 1 bis 8, **dadurch gekennzeichnet, dass** ein dem auslenkbaren Gehäuseteil (4, 4a, 4b, 4c) zugeordneter Teil der Übertragungsvorrichtung (7) über ein Kardangelenk mit dem im anderen Gehäuseteil (3, 3a, 3b, 3c) angeordneten Teil der Übertragungsvorrichtung (7) verbunden ist.

11. Zahnbürste nach einem der Ansprüche 1 bis 10, **dadurch gekennzeichnet, dass** die Auslenkung des Gehäuseteiles (4, 4a, 4b, 4c) bzw. die Veränderung des Winkels zwischen der Bürstenkopf-Drehachse (B) und der Längsachse (A) im Winkelbereich von 0° bis 90° erfolgt und vorzugsweise etwa 6° beträgt.

12. Zahnbürste nach einem der Ansprüche 1 bis 11, **dadurch gekennzeichnet, dass** der Winkel zwischen der Bürstenkopf-Drehachse (B) und der Längsachse (A) in einer Normalstellung etwas kleiner und in einer maximalen Auslenkstellung etwas grösser ist als ein rechter Winkel, d.h. dass der Bürstenkopf (5) in der Normalstellung nach rückwärts und in der Auslenkstellung nach vorwärts geneigt ist.

13. Zahnbürste nach einem der Ansprüche 1-12, mit einem eine alternierende Drehbewegung ausführenden Bürstenkopf (5), **dadurch gekennzeichnet, dass** die Uebertragungsvorrichtung (7) derart ausgebildet ist, dass bei einer durch die Einwirkung von Kräften in Richtung gegen die Bürstfläche (12) verursachten Zurückdrängung des Bürstenkopfes (5) sich dessen Drehwinkel verringert.

14. Aufsteckteil (1) für eine motorisch, insbesondere elektromotorisch, betriebene Zahnbürste gemäss einem der Ansprüche 1-13, mit einem auf den Griffteil der Zahnbürste aufsteckbaren, langgestreckten, innen einen Hohlraum (6) aufweisenden Gehäuse (2, 2a, 2b, 2c), mit einem im Gehäuse (2, 2a, 2b, 2c) drehbeweglich gelagerten Bürstenkopf (5), der einen Borstenträger (10) mit abstehenden Borsten (11) aufweist, deren Enden eine Bürstfläche (12) bilden, wobei die Drehachse (B) des Bürstenkopfes (5) in einem Winkel zur Längsachse (A) des Gehäuses (2, 2a, 2b, 2c) angeordnet ist, und mit einer im Hohlraum des Gehäuses (2, 2a, 2b, 2c) angeordneten und mit dem Bürstenkopf (5) in Antriebsverbindung stehenden Übertragungsvorrichtung (7), die mit einem im Griffteil der Zahnbürste untergebrachten Antrieb koppelbar ist und über welche der Bürstenkopf (5) drehbeweglich antreibbar ist, **dadurch gekennzeichnet, dass** das Gehäuse (2, 2a, 2b, 2c) eine Biegezone (29, 29a, 29b, 29c) aufweist und durch diese in zwei Gehäuseteile (3, 3a, 3b, 3c; 4, 4a, 4b, 4c) unterteilt ist, die relativ zueinander derart elastisch auslenkbar sind, dass bei einer Einwirkung von Kräften in Richtung gegen die Bürstfläche (12) der Bürstenkopf (5) in einer durch die Bürstenkopf-Drehachse (B) und die Längsachse (A) des Gehäuses (2, 2a, 2b, 2c) definierten Ebene elastisch verschwenkbar bzw. zurückdrängbar ist, und dass die Übertragungsvorrichtung (7) derart ausgebildet ist, dass die Antriebsverbindung mit dem Bürstenkopf (5) auch bei der Auslenkung der Gehäuseteile (3, 3a, 3b, 3c; 4, 4a, 4b, 4c) relativ zueinander erhalten bleibt.

15. Aufsteckteil nach Anspruch 14, **dadurch gekennzeichnet, dass** der Aufsteckteil (1) nach einem der Ansprüche 2-13 ausgebildet ist.

16. Motorisch betriebene Zahnbürste, insbesondere eine Elektrozahnbürste, mit einem langgestreckten, innen einen Hohlraum (6) aufweisenden Gehäuse (2, 2a, 2b, 2c), mit einem im Gehäuse (2, 2a, 2b, 2c) drehbeweglich gelagerten Bürstenkopf (5), der einen Borstenträger (10) mit abstehenden Borsten (11) aufweist, deren Enden eine Bürstfläche (12) bilden, wobei die Drehachse (B) des Bürstenkopfes (5) in einem Winkel zur Längsachse (A) des Gehäuses (2, 2a, 2b, 2c) angeordnet ist, und mit einer im Hohlraum des Gehäuses (2, 2a, 2b, 2c) angeordneten, mit einem Antrieb koppelbaren Übertragungsvorrichtung (7), über welche der Bürstenkopf (5) drehbeweglich antreibbar ist, **dadurch gekennzeichnet, dass** das Gehäuse (2, 2a, 2b, 2c) eine Biegezone (29, 29a, 29b, 29c) aufweist und durch diese in zwei Gehäuseteile (3, 3a, 3b, 3c; 4, 4a, 4b, 4c) unterteilt ist, die relativ zueinander derart elastisch auslenkbar sind, dass bei einer Einwirkung von Kräften in Richtung gegen die Bürstfläche (12) der Bürstenkopf (5) in einer durch die Bürstenkopf-Drehachse (B) und die Längsachse (A) des Gehäuses (2, 2a, 2b, 2c) definierten Ebene elastisch verschwenkbar bzw. zurückdrängbar ist, und dass die Übertragungsvorrichtung (7) derart ausgebildet ist, dass eine Antriebsverbindung mit dem Bürstenkopf (5) auch bei der Auslenkung der Gehäuseteile (3, 3a, 3b, 3c; 4, 4a, 4b, 4c) relativ zueinander erhalten bleibt, wobei die Uebertragungsvorrichtung (7) vorzugsweise eine flexible, im Hohlraum (6) des Gehäuses (2, 2a, 2b, 2c) angeordnete Antriebswelle (8) umfasst.
